# EUROPEAN PATENT SPECIFICATION

(11) **EP 1 637 582 B1**
(45) Date of publication and mention of the grant of the patent: **16.05.2007**
(21) Application number: 04022380.2
(22) Date of filing: 21.09.2004
(51) Int. Cl.: C11B 13/00, C11B 13/02, C10L 1/02

(54) **A process for recovering tall oil or tall oil fuel**
Verfahren zur Gewinnung von Tallöl oder Tallölbrennstoff
Procédé de récupération de tall oil ou de carburant tall oil

(43) Date of publication of application: 22.03.2006
(73) Proprietor: Linde AG, 65189 Wiesbaden (DE)
(72) Inventor: Lindström, Curt, 941 43 Pitea (SE); Stigsson, Lars, 133 36 Saltsjöbaden (SE); Kjellberg, Nils, 175 52 Järfälla (SE); Sellerholm, Per, 112 64 Stockholm (SE)
(74) Representative: Hjelt, Pia Dorrit Helene

(56) References cited:
- WO-A-95/23837
- WO-A-20/04074415
- SE-C2- 503 856
- US-A- 4 483 791
- US-A1- 2003 120 095

## Description

The present invention relates to a process for providing tall oil or tall oil fuel from tall oil soap. The invention also relates to the use of alkaline earth metal compounds for improving the recovery of tall oil and/or tall oil fuel. The invention provides improvements in the sodium and sulfur balance of a sulfate pulp mill.

Sodium and sulfur balances are of a very high importance when controlling the process and runnability of a Kraft or sulfate pulp mill. There are several methods in the prior art to control the S/Na-balance. Such methods include dumping of recovery boiler electrostatic precipitator dust, internal production of sulfuric acid, reduced sulfur content in input chemicals or fuels etc.

A major source for sulfur input is the use of sulfuric acid in the production of tall oil from tall oil soap. Tall oil soap is produced as a byproduct in the cooking of wood chips in the sulfate pulping process. The spent cooking liquor or "black liquor" contains sodium soaps of resin acids and fatty acids (tall oil) as well as some neutral or unsaponifiable components.

Crude tall oil soap is skimmed off the top of concentrated black liquor. The tall oil soap generally has a pH between 10 and 12, usually close to 12 and it still contains about 40 to 50 % black liquor. The separated tall oil soap is traditionally acidulated with sulfuric acid to a pH of about 3 to 4 at which pH the sodium soaps of the tall oil fatty acids are released and can be separated from the aqueous phase. The free tall oil can be used to provide a number of different chemicals for various industrial applications.

The sulfuric acid, which is used in the acidulation increases the sulfur input and distorts the sulfur balance in the pulp mill. One method which has been used in the prior art to reduce the sulfur input in the tall oil soap acidulation is to replace part of the sulfuric acid with carbon dioxide. There are a number of patents relating to such processes.

Thus, for instance US patent 3,901,869 (Westvaco) describes the acidulation of tall oil soap with carbon dioxide and water to a pH of 7 to 8. The resulting oil phase is separated from the aqueous bicarbonate brine phase and is then further acidulated with sulfuric acid.

US patent 4,075,188 (Westvaco) describes an improvement of the carbon dioxide treatment by the use of a water-immiscible solvent such as hexane and naphta in which the free fatty acids are more soluble than the soaps.

US Patent 4,495,095 (Union Camp) discloses acidulation of tall oil soaps with carbon dioxide under a pressure at which the carbon dioxide is in a supercritical state.

US Patent 5,286,845 (Union Camp) discloses neutralization of tall oil soap with carbon dioxide under pressure and separation of the bicarbonate brine also under pressure. Substantial savings in the use of sulfuric acid for the final acidulation are provided.

WO 95/23837 (Metsäbotnia) discloses a carbon dioxide neutralization of tall oil soap wherein an extra neutralization with sulfuric acid is performed before the separation of the bicarbonate brine and the neutralized soap. The final acidulation to free the tall oil is performed with sulfuric acid.

WO 98/29524 (AGA) discloses cleaning of the crude tall oil soap with carbon dioxide to remove lignin impurities prior to neutralization with carbon dioxide and/or sulfuric acid.

Despite the attempts to reduce the sulfur input in the tall oil recovery, most mills are forced to use sulfuric acid at least for the final acidulation. The industrially useful methods available only replace around 35% of the sulfuric acid used in the acidulation step.

An alternative to recovering tall oil from the soaps is to use the tall oil soaps or the crude tall oil as fuel in the furnaces of the mill. This reduces the input of sulfur since it is not necessary to fully free the tall oil and thus less sulfuric acid is needed.

In an attempt to improve the use of the tall oil soap as fuel, SE patent 503 856 (AGA) discloses a process for reacting tall oil soap with carbon dioxide to free a part of the sodium of the soaps into the aqueous phase and to mix the oil phase of the reaction mixture with a combustible solvent such as diesel oil to provide a fuel without having to add sulfur into the process.

However, combustion of the tall oil soaps poses another problem in that it affects the sodium balance of the mill's chemical recovery. Moreover, the high level of sodium in the tall oil soap makes it unsuitable as a fuel for the lime sludge rebuming kiln of the mill. The sodium in tall oil soap also cause problems when burned in other furnaces e.g. plugging.

In a process for recovering volatile tall oil components, US Patent application 20030120095 discloses a process for the recovery of unsaponifiable components of tall oil soap, crude tall oil or tall oil pitch. The saponifiable compounds are first transformed into metal soaps and then the mixture is subjected to distillation to recover volatile unsaponified components. The remaining saponified mixture may then be acidulated in the traditional way with a mineral acid.

There exists a need to reduce the amount of sulfuric acid in the treatment of tall oil soap. Specifically, there is a need to reduce the input of sulfur into the tall oil recovery cycle so as to reduce the sulfidity, i.e. the amount of sulfur in the over-all sulfate process of a sulfate pulp mill. There is also a need for improving the control of the sodium/sulfur balance of a sulfate pulp mill and to improve the recovery of chemicals and useful products from the aqueous phases of the tall oil recovery cycle.

The present invention sets out to solve these and other problems of the prior art and to provide a process for recovery of valuable tall oil products with a reduced amount of sulfur input. The invention also enables the recovery valuable tall oil products with an improved sodium balance in the chemical control of the mill.

In accordance with a preferred embodiment of the invention, there is provided a process for providing tall oil or tall oil fuel from the byproducts of a sulfate pulping process. The process comprises the steps of
- providing an aqueous tall oil soap at a pH between 10 and 12, wherein fatty acids and resin acids contained therein are in the form of sodium soaps;
- converting at least a significant portion of said sodium soaps into alkaline earth metal soaps in order to reduce the sodium content thereof and to provide a converted product;
- optionally neutralizing said tall oil soap to a pH of 7 to 9 with carbon dioxide before or after said conversion to provide a neutralized product;
- separating the converted and optionally neutralized product into an aqueous phase and an oil phase;
- recovering the oil phase of said converted and optionally neutralized product as a low sodium fuel; or
- acidulating the oil phase of said converted and neutralized product with an acid to provide tall oil.

The conversion of the sodium soaps into alkaline earth metal soaps is preferably performed with an alkaline earth metal compound selected from salts and oxides of calcium and magnesium and mixtures thereof. The conversion reaction is preferably performed to completion, i.e. until an equilibrium is reached between the converted (alkaline earth metal) soaps and the sodium soaps.

In a preferred embodiment of the invention tall oil soap is first contacted with an alkaline earth metal compound and thereafter the reaction mixture is neutralized with carbon dioxide. Finally, the oil phase is separated from the aqueous brine phase.

In another preferred embodiment of the process, the tall oil soap is first neutralized with carbon dioxide and water and the sodium soaps remaining in the resulting mixture or in the separated soap oil are then converted into alkaline earth metal soaps. Preferably a substantial part and most preferably more than 50% of the sodium soaps in the soap oil are thus converted.

Converting the sodium soaps into alkaline earth metal soaps reduces the sodium content of the oil phase of the tall oil soap or soap oil. Moreover, the resulting oil phase generally has a higher dry content and a less sticky consistency and is thus easier to handle than the traditional sodium soap products.

The low sodium oil phase is suitable as a biological fuel in the place of fossil fuels in the lime kiln and other oil fired installations at a sulfate pulp mill. In a preferred embodiment of the invention, the oil phase also contains an organic solvent, which further improves the combustion properties of the biological fuel. The calorimetric value of the converted soap oil is improved over that of the non-converted one.

In a preferred embodiment of the invention, the oil phase of the carbon dioxide neutralized and converted soap oil is acidulated with an acid which lacks sulfur to provide a tall oil phase and an aqueous phase with a pH which is preferably about 3 to 4 whereafter tall oil is recovered from said tall oil phase. In this way tall oil may be produced without any sulfur input at all.

In the following the invention will be described in greater detail and illustrated with specific experiments.

In the description and claims of the present specification the term "crude tall oil soap" and "tall oil soap" refers to the tall oil soap skimmed off black liquor in the traditional manner. The tall oil soap has a pH above 10 and generally about pH 11 to 12. It contains about 40 to 50 % aqueous black liquor and the rest fatty acids and resin acids in the form of soaps as well as unsaponifiable components generally found in such products. In the unconverted "tall oil soap", the soaps are all in sodium form.

The term "converted tall oil soap" refers specifically to a tall oil soap which has the same composition as traditional tall oil soap but wherein at least a significant part of the saponifiable components have been converted from sodium soaps into alkaline earth metal soaps.

The term "soap oil" refers to a product, which has been obtained by the neutralization of tall oil soap with carbon dioxide and water to free a part of the tall oil soaps and from which the aqueous brine phase has been separated. The soap oil has a pH below 9 and typically between 7 and 8. The term "converted soap oil" refers specifically to a soap oil, wherein at least a substantial portion of the fatty acid and resin acid soaps are in the form of alkaline earth metal soaps.

The raw material of the present invention is crude tall oil soap or tall oil soap, which has been purified by washing with water or the like solvent or cleaning with carbon dioxide. Especially, when the oil phase is to be used as a fuel, there is no need to purify the crude soap in any way.

The aim of the process is to provide a valuable product from the tall oil soap without increasing the sulfur load of the sulfate pulp mill and without negatively affecting the sodium balance.

An aim of the invention is also to provide the aqueous phases of the tall oil soap treatment cycles in a form which either allows for recovery of the chemicals contained in said aqueous phases in the pulping or chemical recovery system of the mill or enables external cleaning or utilization of the aqueous phase.

The aim of the invention can be realized either by producing a tall oil fuel with a low sodium content or by producing tall oil by a low sulfur process or totally without sulfur.

In the preferred aspect of the present invention tall oil soap wherein the fatty acids and resin acids are in the sodium soap form are neutralized with carbon dioxide and water to a pH below 8 or until the emulsion formed breaks into an oil phase (soap oil) and an aqueous bicarbonate brine phase. The reaction which frees part of the saponified fatty acids and/or resin acids can be described as follows

RCOONa + CO₂ + H₂O -> RCOOH + NaHCO₃

.

This reaction is known in the prior art and it can be performed in any of the manners described in the prior art. A preferred reaction according to the present invention takes place with carbon dioxide at atmospheric pressure, although pressurized systems may also be used. As water is a reagent in the reaction, water has to be added to the tall oil soap even though the soap contains a large amount of water in itself. The ratio by weight of aqueous soap to added water is suitably between 2:1 and 1:2, preferably 1.2:1 to 1:1.2. In a typical operation, the amount of water just about equals that of the tall oil soap.

The amount of carbon dioxide that needs to be added to the mixture depends on the properties of the raw material. However, carbon dioxide should be added until a sufficient amount of fatty and resin acids have been freed so as to make the oil-in-water emulsion break. This takes place at a pH below 9 and typically at a pH between 7 and 8.

When the emulsion breaks, the reaction mixture is allowed to settle in an oil phase floating on top of an aqueous bicarbonate brine phase. The bicarbonate brine is preferably circulated to chemical recovery. The oil phase comprises soap oil, wherein part of the tall oil fatty and resin acids is in free acid form and the other part is in the form of sodium soaps.

According to the invention, the sodium soaps of the tall oil soap or soap oil are converted into alkaline earth metal soaps by reaction with an alkaline earth metal compound. The conversion reaction is believed not to affect the free fatty acids and resin acids nor the unsaponifiable components of the soap oil. The conversion may be performed before or after the carbon dioxide neutralization. The aqueous phase of the mixture may be separated after the neutralization and/or after the conversion. However, to date the best results seem to be obtainable by separating the aqueous phase when both conversion and neutralization has been performed on a tall oil soap.

The alkaline earth metal of the compound used in the conversion of the present invention may be any alkaline earth metal such as calcium, magnesium, strontium or barium. However, calcium and magnesium compounds are preferred. The most preferred converting compounds are calcium compounds. The preferred alkaline earth metal compounds used in the conversion are selected from salts and oxides of calcium and magnesium. It is also possible to use and mixtures thereof.

Preferred converting compounds are selected from calcium oxide, calcium hydroxide, calcium carbonate, calcium nitrate, calcium chloride, calcium sulfate, magnesium hydroxide, magnesium nitrate, magnesium chloride, magnesium sulfate and mixtures thereof. Calcium oxide and calcium carbonate are preferred because they form a part of the compounds already present in a sulfate pulp mill. Calcium nitrate and magnesium nitrate are preferred because they are bulk chemicals on the market, they are easily soluble in water and because the nitrate in the aqueous phase of the conversion reaction can be recovered and utilized externally e.g. for fertilization purposes. Calcium and magnesium sulfates also dissolve well in water but the use of such sulfates adds to the sulfur input in the mill, which is to be avoided unless the aqueous phase can be cleaned externally from the mill. Calcium chloride, although soluble in water has been found to provide a rather sticky oil phase, wherefore its use is not among the preferred ones.

The amount of converting alkaline earth metal compound is preferably sufficient to convert as much as possible and preferably more than 50% of the sodium soaps into alkaline earth metal soaps. Some sodium soaps will, however, generally remain in the mixture because of the chemical equilibrium reactions.

The conversion reaction is preferably performed by adding the alkaline earth metal compound to the soap oil and heating the mixture at about 40 to 90°C, preferably about 50 to 75°C until a substantially complete conversion has taken place. The alkaline earth metal compound is preferably at least partially soluble in the aqueous phase of the reaction mixture and it may be added as a water solution. The reaction mixture is preferably stirred during the reaction so as to improve the contact between the reagents.

The reaction time of the conversion is not critical and can be experimentally determined by simple analysis of the amount of sodium left in the oil phase. In the preferred reaction, substantially all of the sodium soaps remaining in the soap oil are converted into alkaline earth metal soaps and the sodium is transferred into the aqueous phase.

It has been found that converting the sodium soaps in the soap oil into alkaline earth metal soaps improves the separation of the oil phase and the aqueous phase and because of this, the converted soap oil can be obtained with a high dry content. The water content of the converted soap oil is typically 40-50%, and it may easily be lowered to below 30%.

After a successful conversion according to the present invention, the level of sodium left in the converted soap oil is very low compared to the initial sodium content, which is typically about 60 to 65 g/ kg calculated on the dry weight of the soap (water-free soap). With the present invention the sodium content is easily lowered to 20 g/kg or less. This is an acceptable value for most fuel purposes. However, by the present invention it is possible to provide an even lower sodium content in the converted soap oil. Thus the sodium content may be less than 10 g/kg or even below 5 g/kg. When an organic solvent is used in the soap oil, as described in greater detail below, the sodium content falls below 1 g/kg, which is very low indeed. The reduction in sodium content may be optimized by the reaction conditions such as the amount and kind of alkaline earth metal compound, reaction time, temperature, stirring, etc. Such optimization is within the general skills of the person skilled in the art.

The converted soap oil may be produced totally without any input of sulfur. It has a low sodium content, a high dry content, as mentioned above, and it also has a good heat value. According to a preferred aspect of the invention the converted soap oil is used as a fuel with low sodium content. The conversion preferably also increases the calorimetric value of the fuel to 25 MJ/kg or more, preferably 30 MJ/kg or more calculated on the total weight of the soap oil. The converted soap oil is easy to handle and it provides a biological fuel, which can easily replace other fuels in the mill. Because of its low sodium content, the converted soap oil is suitable as a fuel for lime kilns as well as other furnaces of the mill. It is also suitable for the production of energy and it has the advantage that its combustion does not produce carbon dioxide emissions from fossil fuels.

It has also been found that the soap oil may be mixed with an organic solvent either before or after the conversion reaction. In case the soap oil is to be used as fuel, the organic solvent is preferably a combustible organic solvent. The solvent is preferably also one, which is capable of dissolving tall oil calcium and/or magnesium soaps. Suitable organic solvents are for example diesel oil, turpentine, hexane, heptane, etc. For fuel purposes diesel oil has proven an excellent solvent since it adds to the fuel value of the converted soap oil. Moreover, diesel oil has proven better in dissolving the calcium and magnesium soaps of the converted soap oil than turpentine. Adding an organic solvent to soap oil should be performed after the soap oil has been separated from the aqueous bicarbonate brine.

Using an organic solvent also improves the handling properties of the converted soap oil and reduces the sodium content further. Adding water to the converted soap oil together with the organic solvent helps to reduce the sodium content of the oil phase.

In an alternative aspect of the invention the sodium soaps of tall oil soap are converted into alkaline earth metal soaps without any neutralization of the soap with carbon dioxide.

In this reaction, the tall oil soap is preferably mixed with water and then reacted at a temperature between 40 and 90°C, preferably 50 to 80°C with an alkaline earth metal compound preferably selected, as above, from oxides and salts of calcium and magnesium. Since the tall oil soap contains more sodium soaps than does the soap oil described above, a larger amount of alkaline earth metal compound should be added to the soap in order to convert all or substantially all of the sodium soaps into alkaline earth metal soaps. The mixture should also be stirred to assist in keeping the reaction mixture uniform.

After the reaction is complete, the aqueous phase and the soap phase are separated to remove the sodium. The converted soap maybe washed e.g. with water to reduce the amount of sodium remaining in the converted product.

The aqueous phase contains a fair amount of sodium hydroxide and it may be used in the sulfate pulping process as a source of sodium hydroxide or it may be returned to the chemical recovery system or be combined with black liquor.

The converted tall oil soap may be used as a fuel with a low sodium content. It is not as easy to handle as the soap oil described above, but it has a good heat value and it may also be used to replace fossil fuels with the same advantages as described above.

The converted tall oil soap may also be neutralized with carbon dioxide and water in the same manner as that described for non-converted tall oil soap. The neutralization with carbon dioxide proceeds smoothly and the resulting oil phase does not materially differ from that produced by first neutralizing and then converting the soap oil. The converted soap oil may be used as a fuel in the same way as describe above.

Irrespective of in which order the neutralization and conversion of the soap has been performed, the resulting converted soap oil may be further acidulated to provide free tall oil. The acidulation may be preformed with sulfuric acid or with a non-sulfur acid.

In case sulfuric acid is used to free the tall oil from the converted soap oil, this cause input of sulfur into the mill. However, it has been found that when the soaps of the tall oil have been converted into alkaline earth metal soaps, the acidulation requires less sulfuric acid than if the no conversion has been made. Thus, if acidulation of tall oil soap with only sulfuric acid is taken to represent 100%, the use of the prior art carbon dioxide neutralization will reduce the amount of sulfuric acid needed with about 35%. However, when a conversion in accordance with the present invention is performed, an acidulation after carbon dioxide neutralization step will require only 50% of the sulfuric acid initially needed. The reason for this reduction in sulfuric acid consumption is not fully understood, but it may be at least partially caused by the improved separation of the aqueous phase and the oil phase in the converted product.

If a totally sulfur-free acidulation is desired, the carbon dioxide neutralized and converted soap oil may be acidulated with a non-sulfur acid to provide a tall oil phase and an aqueous phase containing alkaline earth metal compounds and having a pH below 5 and preferably between 3 and 4. The tall oil recovered from such an acidulation is of the same quality as a tall oil produced with sulfuric acid.

Suitable non-sulfur acids are selected from hydrochloric acid, formic acid, per-acetic acid, boric acid and nitric acid. Nitric acid and formic acid are preferred.

The aqueous phase of the acidulation, irrespective of whether it is made with sulfuric acid or a non-sulfur acid can be sent to chemical recovery or pulping and the sulfur-free liquid may also be sent to external cleaning.

The invention will be further illustrated by the following examples.

### Reference Example

### Neutralization of tall oil soap with carbon dioxide

The equipment used in the trial included a pilot plant reactor normally used for pulp experiments. Tall oil soap from a sulfate pulp mill (800g) and water (1030 ml) were added to the reactor. Mixing started and then carbon dioxide was added. A constant pressure [about 1.5 bar (150 kPa)] in the reactor was achieved by adding carbon dioxide. After about 20 minutes reaction the mixing was stopped and the mixture was allowed to settle for about 30 minutes. After this the brine was taken out from the reactor by using an evacuation valve. Subsequently, the produced soap oil was taken out by using the same valve. The pH of the product was between 7 and 8. It had a sodium content of 40.2 g/kg calculated on the dry weight.

The same principles were used to provide soap oil in the examples below.

### Example 1

### Tall oil soap conversion from sodium to alkaline earth metal soap

Tall oil soap from a sulfate pulp mill was used in the experiments. The soap had a sodium content of about 65 g/kg calculated on the dry weight of the soap. The soap was added to the reactor used in the Reference Example and mixed with water and different calcium compounds. The reaction mixture was heated to about 50 °C for a time specified in Table 1. The mixture was stirred at 100 rpm during the reaction.

**Table 1a. Tall oil soap conversion with alkaline earth metal**

| Tall oil soap | Water | Alkaline earth/water | Reaction time | Stirring | Test # |
|---|---|---|---|---|---|
| 802 g | 920 ml | Ca(NO₃)₂ 29g/716 ml | 40 min | 100 rpm | 417-9c |
| 803 g | 500 ml | CaCO₃ 72 g/200 ml | 21 min | 100 rpm | 417-9b |

After the reaction the oil phase (soap phase) and the aqueous phase were separated and the sodium and alkaline earth contents in the phases as well as the dry content of the oil phase were measured. The results of the tests are shown below in Table 1b

**Table 1 b. Tall oil soap conversion result**

| Na/aq. g/l | Ca/aq g/l | Na/oil g/kg | Ca oil g/kg | Dry matter % | Test # |
|---|---|---|---|---|---|
| 24.1 | 6.7 | 36.2 | 3.96 | 64.5 | 417-9c |
| 22.0 | 1.19 | 59.7 | 1.65 | 50.8 | 417-9b |

### Example 2

### Tall oil soap neutralization and conversion

Tall oil soap from a sulfate mill was converted to alkaline earth metal soaps in connection with the neutralization of the soap with carbon dioxide to form a converted soap oil. The equipment used was the same as in the Reference Example and the carbon dioxide neutralization was performed as described in said Reference Example.

Various alkaline earth metal compounds were added to the soap at various points of the experiment. The temperature of the tests was generally about 50°C but in test # 423-3a the temperature was 73°C and in test # 423-3c the temperature was 40°C. In these two tests the alkaline earth metal compound was added at the end of the neutralization while in the other tests the alkaline earth metal compound was added at the start of the carbon dioxide neutralization. In test # 423-3b the soap was first allowed to react with the alkaline earth metal and then carbon dioxide was added to the so converted mixture. The reaction parameters are shown in Table 2a.

**Table 2a. Tall oil neutralization with CO₂ and conversion with alkaline earth metal**

| Tall oil soap | Water | Alkaline earth/water | Reaction time | Stirring | Test # |
|---|---|---|---|---|---|
| 806 g | 1050 ml | Ca(NO₃)₂ 16 g/716 ml | 95 min | 250 rpm | 423-3a |
| 824 g | 0 ml | Ca(NO₃)₂ 23 g/716 ml | 90 min | 250/110 rpm | 423-3b |
| 803 g | 1050 ml | Ca(NO3)₂ 16 g/716 ml | 95 min | 250 rpm | 423-3c |
| 390 g | 500 ml | MgSO₄ 82 g | 10 min | 250 rpm | 410-8 |

After the reaction the oil phase (soap oil phase) and the aqueous phase were separated and the sodium and alkaline earth contents in the phases as well as the dry content of the oil phase were measured. The results of the tests are shown below in Table 2b. The X-marked columns indicate that the values were not measured.

**Table 2b. Tall oil soap neutralization and conversion result**

| Na/aq. g/l | Ca/aq mg/l | Na/oil g/kg | Ca/oil Mg/oil mg/kg | Dry matter % | Test # |
|---|---|---|---|---|---|
| 16.2 | 20.6 | 15.2 | 23800 | 81.2 | 423-3a |
| 24.9 | 140 | 8.93 | 39800 | 82.5 | 423-3b |
| 14.9 | 163 | 21.4 | 18300 | 65.9 | 423-3c |
| X | X | 28.0 | 2510 24200 | 61.9 | 410-8 |

The results show that it is possible to provide a low sodium content in a neutralized soap oil by converting the sodium soaps to alkaline earth metal soaps.

As a reference, the soap used in test # 423-3b was neutralized in the same manner as in test # 423-3b but without any conversion. The non-converted and converted soap oils were analyzed and it was found that while the non-converted soap oil had a Na content of 2.4 % by weight (calculated on the total weight) and a Ca content of 0.2 % by weight, the converted soap oil had a Na content of only 0.37 % by weight and a Ca content of 2.2 % by weight.

The two soap oils were also analysed according to the test method ASTM D 4809 for calorimetric value and it was found that the calorimetric value had risen by the conversion from 23.18 MJ/kg for the non-converted soap oil to 31.16 MJ/kg for the converted soap oil.

This indicates that the conversion improves the fuel properties of the soap oil to a significant degree.

### Example 3

### Soap oil conversion

Soap oil produced as in Example 1 was treated with various calcium compounds to convert their sodium soaps to calcium soaps. Water was also added to the soap oil to facilitate the reaction. The reaction mixture was heated to a temperature between 40 and 90 °C. The mixture was stirred during the reaction.

The reagents and reaction conditions are shown in Table 3a:

**Table 3a. Soap oil conversion**

| Soap oil | Water | Alkaline earth/water | Reaction time | Stirring | Test # |
|---|---|---|---|---|---|
| 200 ml | 390 ml | CaCl₂ 100g/500 ml | 35 min | 100 rpm | 410-4d |
| 520 ml | 500 ml | Ca(NO₃)₂ 15.7 g | 95 min | 120-80 rpm | 417-2 |
| 646 ml | 716 ml | Ca(NO₃)₂ 16.3 g | 20 min | 10 rpm | 423-2 |

After the reaction the oil phase (soap oil phase) and the aqueous phase were separated and the sodium and alkaline earth contents in the phases as well as the dry content of the oil phase were measured. The results indicate that test 423-2, wherein calcium was added in a separate step after the separation of the aqueous brine phase did not provide as good results as adding the calcium and the carbon dioxide to the same mixture. The results of the tests are shown below in Table 1b.

**Table 3 b. Tall oil soap conversion result**

| Na/aq. g/l | Ca/aq g/l | Na/oil g/kg | Ca oil g/kg | Dry matter % | Test # |
|---|---|---|---|---|---|
| 13.1 | 21.3 | 12.4 | 62.9 | 51.4 | 410-4d |
| 17.1 | 3.1 | 19.1 | 28.2 | 72.6 | 417-2 |
| 10.5 | 5.9 | 21.3 | 26.1 | 69.9 | 423-2 |

The results show that it is possible to provide a low content of sodium in a separated soap oil by converting its sodium soaps into alkaline earth metal soaps.

### Example 4

### Mixing with organic solvents

The neutralization of tall oil soap with carbon dioxide and the use of alkaline earth metal salts to convert the sodium soaps to alkaline earth metal soaps was tested in combination with an organic solvent such as turpentine and/or diesel oil. The tests showed that adding water and turpentine and/or diesel oil to the soap oil is very effective in reducing the sodium content of the converted soap oil. In a preferred test a sodium level below 1 g/kg was obtained.

In all of the tests the neutralization was performed with carbon dioxide substantially as indicated in the Reference Example. The diesel oil was added to the soap oil after separation of the bicarbonate brine. The calcium compound was added either to the soap or to the soap oil.

The parameters and results for a set of test runs with diesel oil and addition of calcium salts at various points of the experiment are shown below in Table 4.

**Table 4**

| Ca compound | Ca addition point | Soap oil/ Diesel oil | Ca in oil phase | Na in oil phase | Test # |
|---|---|---|---|---|---|
| CaCl₂ 100g | Soap oil | 600/400 ml | 32.7 g/kg | 0.31 g/kg | 410-3b |
| CaCl₂ 100g | Soap | 540/400 ml | 40.2 g/kg | 3.59 g/kg | 410-3c |
| CaO 21 g | Soap oil | X /400 ml | 59.1 g/kg | 8.26 g/kg | 410-7b |

### Example 5

### Acidulation of soap oil

The converted soap oil obtained in test # 417-2 of Example 4 was acidulated with 2 M sulphuric acid in the traditional manner. The free tall oil at a dry content of 97.9 % contained 12 mg/kg of sodium. Its fatty acids and resin acids were similar to those obtained by a conventional acidulation with only sulphuric acid.

The amount of sulphuric acid required for the acidulation was only 260 ml, which is 30 % less than the amount of sulphuric acid needed to acidulate a traditional carbon dioxide neutralized and non-converted soap oil. It is about half of the amount needed to acidulate the tall oil soap with only sulphuric acid.

Trials were also made to acidulate the soap oil with non-sulfur acids. It was found that especially formic acid performed very well and provided a good free tall oil.

The above examples serve to illustrate the invention. Based on the above description and examples a person skilled in the art will be able to utilize the invention in many ways and to vary the compounds, their addition points and amounts so as to obtain a product suitable for his specific needs. Such variations and modifications are considered to be within the scope of the appended claims.

## Claims

1. A process for providing tall oil or tall oil fuel, **characterized in**
a) providing an aqueous tall oil soap at a pH between 10 and 12, wherein fatty acids and resin acids contained therein are in the form of sodium soaps
b) converting at least a significant portion of said sodium soaps into alkaline earth metal soaps in order to reduce the sodium content thereof and to provide a converted product,
c) optionally neutralizing said tall oil soap to a pH of 7 to 9 with carbon dioxide before or after said conversion to provide a neutralized product,
d) separating the converted and optionally carbon dioxide neutralized product into an aqueous phase and an oil phase, and
e) recovering the oil phase of said converted and optionally carbon dioxide neutralized product as a low sodium fuel, or
f) acidulating the oil phase of said converted and carbon dioxide neutralized product with an acid to provide tall oil.

2. A process according to claim 1, wherein aqueous tall oil soap is reacted with an alkaline earth metal compound and the reaction mixture is neutralized with carbon dioxide, to provide a neutralized and converted product having an aqueous bicarbonate brine phase and an oil phase, whereafter the bicarbonate brine is separated and the neutralized and converted oil phase is recovered as converted soap oil.

3. A process according to claim 1, wherein aqueous tall oil soap is neutralized with carbon dioxide and the neutralized product is reacted with an alkaline earth metal compound, and resulting aqueous bicarbonate brine resulting from said neutralization is separated from the neutralized product before or after said reaction with said alkaline earth metal compound.

4. A process according to claim 3, wherein said neutralization is performed in the presence of said alkaline earth metal compound.

5. A process according to claim 1, wherein said tall oil soap is reacted with an alkaline earth metal compound and the converted soap is recovered as a biological fuel.

6. A process according to any one of claims 1 to 5, wherein said conversion reaction is performed with an alkaline earth metal compound selected from salts and oxides of calcium and magnesium and mixtures thereof.

7. A process according to claim 6, wherein said compound is selected from calcium oxide, calcium hydroxide, calcium carbonate, calcium nitrate, calcium chloride, calcium sulfate, magnesium hydroxide, magnesium nitrate, magnesium chloride, magnesium sulfate and mixtures thereof, preferably from calcium oxide and calcium nitrate.

8. A process according to claim 6, wherein said alkaline earth metal compound is soluble in water and is added dissolved in water.

9. A process according to claim 1, said conversion reaction is performed at a temperature of 40 to 90°C, preferably 50 to 75°C.

10. A process according to claim 9, wherein a sufficient amount of alkaline earth metal compound is used in said conversion reaction to convert more than 50% of said sodium soaps into alkaline earth metal soaps.

11. A process according to claim 1, wherein the oil phase of said neutralized product is mixed with a combustible organic solvent, which is preferably capable of dissolving tall oil calcium and magnesium soaps.

12. A process according to claim 11, wherein said organic solvent is selected from diesel oil, turpentine, hexane and heptane.

13. A process according to claim 1, wherein said low sodium fuel contains sodium less than 20 g/kg, preferably less than 10 g/kg, most preferably below 5 g/kg calculated on the dry weight of the oil phase.

14. A process according to claim 11, wherein said neutralized product comprises converted soap oil having a sodium content of less than 1 g/kg calculated on the dry weight of the soap oil.

15. A process according to claim 2, wherein said alkaline earth metal compound comprises calcium nitrate and said soap oil is recovered as a biological fuel having a calorimetric value of 25 MJ/kg or more, preferably 30 MJ/kg or more.

16. A process according to claim 1, wherein said aqueous phase of said converted and non-neutralized product is recovered as a source of sodium hydroxide for use in the Kraft pulping of wood.

17. A process according to claim 1, wherein said neutralization is performed by adding water to said aqueous tall oil soap in an amount to provide a weight ratio of aqueous soap to added water between 2:1 and 1:2, preferably about 1.2:1 and 1:1.2 and carbon dioxide is added at atmospheric pressure in an amount sufficient to provide a pH of about 8 to 7 in the aqueous bicarbonate brine phase.

18. A process according to claim 1, wherein the oil phase of said converted and neutralized product is acidulated with a non-sulfur acid to provide a tall oil phase and an aqueous phase with a pH below 5, preferably a pH of about 3 to 4 and tall oil is recovered from said tall oil phase.

19. A process according to claim 18, wherein said acidulating acid is selected from hydrochloric acid, formic acid, peracetic acid, boric acid and nitric acid.

20. A process according to claim 18 or 19, wherein the aqueous phase having a pH below 5 is recovered and fed to a treatment selected from external cleaning, chemical recovery and pulping.

21. A process according to claim 1, wherein said conversion is performed with an alkaline earth metal compound selected from calcium nitrate and magnesium nitrate and the aqueous phase of said neutralized product is recovered and used for fertilization purposes.

22. A process according to any one of the preceding claims, wherein said conversion is performed for lowering the sodium content and/or increasing the calorimetric value of fuel obtained from tall oil soap.

23. A process according to any one of the preceding claims, wherein said process is performed for reducing the input of sulfur in the recovery of valuable tall oil products.

24. Use of an alkaline earth metal compound for improving the production of fuel from tall oil soap, wherein tall oil soap, which may be neutralized with carbon dioxide, is treated with an alkaline earth metal compound to convert sodium soaps into alkaline earth metal soaps.

25. Use of an alkaline earth metal compound for reducing the input of sulfur in the recovery of tall oil from tall oil soap, wherein tall oil soap, which may be neutralized with carbon dioxide, is treated with an alkaline earth metal compound to convert sodium soaps into alkaline earth metal soaps.

## Patentansprüche

1. Verfahren zur Bereitstellung von Tallöl oder Tallölbrennstoff, **gekennzeichnet durch**
a) das Bereitstellen einer wässrigen Tallölseife bei einem pH-Wert zwischen 10 und 12, wobei darin enthaltene Fettsäuren und Harzsäuren in Form von Natriumseifen vorliegen,
b) das Umwandeln von mindestens einer signifikanten Portion der Natriumseifen zu Erdalkalimetallseifen, um den Natriumgehalt davon zu senken und ein umgewandeltes Produkt bereitzustellen,
c) gegebenenfalls das Neutralisieren der Tallölseife zu einem pH-Wert von 7 bis 9 mit Kohlendioxid vor oder nach der Umwandlung, um ein neutralisiertes Produkt bereitzustellen,
d) das Abtrennen des umgewandelten und gegebenenfalls **durch** Kohlendioxid neutralisierten Produktes in eine wässrige Phase und eine Ölphase und
e) das Gewinnen der Ölphase des umgewandelten und gegebenenfalls **durch** Kohlendioxid neutralisierten Produktes als ein Brennstoff mit niedrigem Natriumgehalt oder
f) das Ansäuern der Ölphase des umgewandelten und mit Kohlendioxid neutralisierten Produktes mit einer Säure, um Tallöl bereitzustellen.

2. Verfahren gemäß Anspruch 1, wobei die wässrige Tallölseife mit einer Erdalkalimetallverbindung umgesetzt wird und die Reaktionsmischung mit Kohlendioxid neutralisiert wird, um ein neutralisiertes und umgewandeltes Produkt mit einer wässrigen Bicarbonatsolephase und einer Ölphase bereitzustellen, wobei die Bicarbonatsolephase abgetrennt wird und die neutralisierte und umgewandelte Ölphase als umgewandeltes Seifenöl gewonnen wird.

3. Verfahren gemäß Anspruch 1, wobei wässrige Tallölseife mit Kohlendioxid neutralisiert wird und das neutralisierte Produkt mit einer Erdalkalimetallverbindung umgesetzt wird, und die resultierende wässrige Bicarbonatsolelösung, welche sich aus der Neutralisation ergibt, von dem neutralisierten Produkt vor oder nach der Reaktion mit der Erdalkalimetallverbindung abgetrennt wird.

4. Verfahren gemäß Anspruch 3, wobei die Neutralisation in Gegenwart der Erdalkalimetallverbindung durchgeführt wird.

5. Verfahren gemäß Anspruch 1, wobei die Tallölseife mit einer Erdalkalimetallverbindung umgesetzt wird und die umgewandelte Seife als ein biologischer Brennstoff gewonnen wird.

6. Verfahren gemäß mindestens einem der Ansprüche 1 bis 5, wobei die Umwandlungsreaktion mit einer Erdalkalimetallverbindung durchgeführt wird, die aus Salzen und Oxiden von Calcium und Magnesium und Mischungen davon gewählt wird.

7. Verfahren gemäß Anspruch 6, wobei die Verbindung aus Calciumoxid, Calciumhydroxid, Calciumcarbonat, Calciumnitrat, Calciumchlorid, Calciumsulfat, Magnesiumhydroxid, Magnesiumnitrat, Magnesiumchlorid, Magnesiumsulfat und Mischungen davon, vorzugsweise aus Calciumoxid und Calciumnitrat, gewählt wird.

8. Verfahren gemäß Anspruch 6, wobei die Erdalkalimetallverbindung in Wasser löslich ist und gelöst in Wasser hinzugesetzt wird.

9. Verfahren gemäß Anspruch 1, wobei die Umwandlungsreaktion bei einer Temperatur von 40 bis 90 °C, vorzugsweise von 50 bis 75 °C, durchgeführt wird.

10. Verfahren gemäß Anspruch 9, wobei eine ausreichende Menge einer Erdalkalimetallverbindung in der Umwandlungsreaktion verwendet wird, um mehr als 50 % der Natriumseifen zu Erdalkalimetallseifen umzuwandeln.

11. Verfahren gemäß Anspruch 1, wobei die Ölphase des neutralisierten Produktes mit einem verbrennbaren organischen Lösungsmittel gemischt wird, welches vorzugsweise zur Auflösung von Tallölcalcium- und -magnesiumseifen in der Lage ist.

12. Verfahren gemäß Anspruch 11, wobei das organische Lösungsmittel aus Dieselöl, Terpentin, Hexan und Heptan gewählt wird.

13. Verfahren gemäß Anspruch 1, wobei der Brennstoff mit niedrigem Natriumgehalt Natrium zu weniger als 20 g/kg, vorzugsweise zu weniger als 10 g/kg, am meisten bevorzugt unterhalb von 5 g/kg, berechnet bezüglich des Trockengewichtes der Ölphase, enthält.

14. Verfahren gemäß Anspruch 11, wobei das neutralisierte Produkt umgewandeltes Seifenöl umfasst, das einen Natriumgehalt von weniger als 1 g/kg, berechnet bezüglich des Trockengewichtes des Seifenöls, umfasst.

15. Verfahren gemäß Anspruch 2, wobei die Erdalkalimetallverbindung Calciumnitrat umfasst und das Seifenöl als ein biologischer Brennstoff mit einem kalorimetrischen Wert von 25 MJ/kg oder mehr, vorzugsweise von 30 MJ/kg oder mehr, gewonnen wird.

16. Verfahren gemäß Anspruch 1, wobei die wässrige Phase des umgewandelten und nicht-neutralisierten Produktes als eine Quelle von Natriumhydroxid zur Verwendung in dem Kraft-Aufschluß von Holz gewonnen wird.

17. Verfahren gemäß Anspruch 1, wobei die Neutralisation durchgeführt wird durch Zugeben von Wasser zu der wässrigen Tallölseife in einer Menge, um ein Gewichtsverhältnis von wässriger Seife zu hinzugesetztem Wasser zwischen 2 : 1 und 1 : 2, vorzugsweise von etwa 1,2 : 1 und 1 : 1,2 bereitzustellen und Kohlendioxid bei atmosphärischem Druck in einer Menge hinzugesetzt wird, die ausreicht, um einen pH-Wert von etwa 8 bis 7 in der wässrigen Bicarbonatsolephase bereitzustellen.

18. Verfahren gemäß Anspruch 1, wobei die Ölphase des umgewandelten und neutralisierten Produktes mit einer Nicht-Schwefelsäure angesäuert wird, um eine Tallölphase und eine wässrige Phase mit einem pH-Wert unter 5, vorzugsweise einem pH-Wert von etwa 3 bis 4, bereitzustellen, und Tallöl aus der Tallölphase gewonnen wird.

19. Verfahren gemäß Anspruch 18, wobei die ansäuernde Säure aus Chlorwasserstoffsäure, Ameisensäure, Peressigsäure, Borsäure und Salpetersäure gewählt wird.

20. Verfahren gemäß Anspruch 18 oder 19, wobei die wässrige Phase mit einem pH-Wert unter 5 gewonnen wird und zu einer Behandlung gespeist wird, die aus einer externen Reinigung, chemischen Rückgewinnung und einem Pulpen bzw. Zellstoffaufschließen gewählt wird.

21. Verfahren gemäß Anspruch 1, wobei die Umwandlung mit einer Erdalkalimetallverbindung durchgeführt wird, die aus Calciumnitrat und Magnesiumnitrat gewählt ist, und die wässrige Phase des neutralisierten Produktes rückgewonnen wird und für Düngungszwecke verwendet wird.

22. Verfahren gemäß mindestens einem der vorhergehenden Ansprüche, wobei die Umwandlung durchgeführt wird zur Senkung des Natriumgehaltes und/oder Steigerung des kalorimetrischen Wertes des aus der Tallölseife erhaltenen Brennstoffes.

23. Verfahren gemäß mindestens einem der vorhergehenden Ansprüche, wobei das Verfahren durchgeführt wird zur Senkung des Eintrags von Schwefel bei der Gewinnung von wertvollen Tallölprodukten.

24. Verwendung einer Erdalkalimetallverbindung zur Verbesserung der Herstellung von Brennstoff aus Tallölseife, wobei Tallölseife, die mit Kohlendioxid neutralisiert sein kann, mit einer Erdalkalimetallverbindung behandelt wird, um Natriumseifen zu Erdalkalimetallseifen umzuwandeln.

25. Verwendung einer Erdalkalimetallverbindung zur Senkung des Eintrags von Schwefel bei der Gewinnung von Tallöl aus Tallölseife, wobei Tallölseife, welche mit Kohlendioxid neutralisiert sein kann, mit einer Erdalkalimetallverbindung behandelt wird, um Natriumseifen zu Erdalkalimetallseifen umzuwandeln.

## Revendications

1. Procédé pour l'obtention d'huile de pin ou de carburant à base d'huile de pin **caractérisé par**
a) l'obtention d'un savon aqueux d'huile de pin à un pH situé entre 10 et 12, dans lequel les acides gras et les acides résiniques contenus dans celui-ci sont sous la forme de savons de sodium,
b) la conversion d'au moins une partie importante desdits savons de sodium en savons d'un métal alcalino-terreux afin de réduire la teneur en sodium de ceux-ci et d'obtenir un produit converti,
c) éventuellement la neutralisation dudit savon d'huile de pin à un pH allant de 7 à 9 avec du dioxyde de carbone avant ou après ladite conversion pour l'obtention d'un produit neutralisé,
d) la séparation du produit converti et éventuellement neutralisé au dioxyde de carbone en une phase aqueuse et en une phase huileuse, et
e) la récupération de la phase huileuse dudit produit converti et éventuellement neutralisé au dioxyde de carbone comme carburant à faible teneur en sodium, ou
f) l'acidification de la phase huileuse dudit produit converti et neutralisé au dioxyde de carbone avec un acide pour l'obtention d'huile de pin.

2. Procédé selon la revendication 1, dans lequel on fait réagir le savon aqueux d'huile de pin avec un composé de métal alcalino-terreux et le mélange réactionnel est neutralisé avec du dioxyde de carbone pour l'obtention d'un produit neutralisé et converti qui possède une phase de saumure de bicarbonate aqueuse et une phase huileuse. Par la suite, la saumure de bicarbonate est séparée et la phase huileuse neutralisée et convertie est récupérée sous forme d'huile de savon convertie.

3. Procédé selon la revendication 1, dans lequel le savon aqueux d'huile de pin est neutralisé avec du dioxyde de carbone, dans lequel on fait réagir le produit neutralisé avec un composé de métal alcalino-terreux, et dans lequel la saumure de bicarbonate aqueuse qui provient de ladite neutralisation est séparée du produit neutralisé avant ou après ladite réaction avec ledit composé de métal alcalino-terreux.

4. Procédé selon la revendication 3, dans lequel ladite neutralisation est effectuée en présence dudit composé de métal alcalino-terreux.

5. Procédé selon la revendication 1, dans lequel on fait réagir ledit savon d'huile de pin avec un composé de métal alcalino-terreux et le savon converti est récupéré sous forme d'un carburant biologique.

6. Procédé selon l'une quelconque des revendications 1 à 5, dans lequel ladite réaction de conversion est effectuée avec un composé de métal alcalino-terreux choisi parmi des sels et des oxydes de calcium et de magnésium et des mélanges de ceux-ci.

7. Procédé selon la revendication 6, dans lequel ledit composé est choisi parmi l'oxyde de calcium, l'hydroxyde de calcium, le carbonate de calcium, le nitrate de calcium, le chlorure de calcium, le sulfate de calcium, l'hydroxyde de magnésium, le nitrate de magnésium, le chlorure de magnésium, le sulfate de magnésium et des mélanges de ceux-ci, de préférence choisi parmi l'oxyde de calcium et le nitrate de calcium.

8. Procédé selon la revendication 6, dans lequel ledit composé de métal alcalino-terreux est soluble dans l'eau et est ajouté sous une forme dissoute dans l'eau.

9. Procédé selon la revendication 1, dans lequel ladite réaction de conversion est effectuée à une température allant de 40 à 90 °C, de préférence de 50 à 75 °C.

10. Procédé selon la revendication 9, dans lequel une quantité suffisante de composé de métal alcalino-terreux est utilisée dans ladite réaction de conversion pour convertir plus de 50 % desdits savons de sodium en savons de métal alcalino-terreux.

11. Procédé selon la revendication 1, dans lequel la phase huileuse dudit produit neutralisé est mélangée avec un solvant organique combustible, lequel solvant peut de préférence dissoudre les savons d'huile de pin à base de calcium et de magnésium.

12. Procédé selon la revendication 11, dans lequel ledit solvant organique est choisi parmi le carburant diesel, la térébenthine, l'hexane et l'heptane.

13. Procédé selon la revendication 1, dans lequel ledit carburant à faible teneur en sodium possède une teneur en sodium inférieure à 20 g/kg, de préférence inférieure à 10 g/kg, plus préférablement inférieure à 5 g/kg, calculée sur le poids sec de la phase huileuse.

14. Procédé selon la revendication 11, dans lequel ledit produit neutralisé comprend une huile de savon convertie dont la teneur en sodium est inférieure à 1 g/kg, calculée sur le poids sec de l'huile de savon.

15. Procédé selon la revendication 2, dans lequel ledit composé de métal alcalino-terreux comprend du nitrate de calcium et ladite huile de savon est récupérée sous forme de carburant biologique dont la valeur calorimétrique est de 25 MJ/kg ou plus, de préférence de 30 MJ/kg ou plus.

16. Procédé selon la revendication 1, dans lequel ladite phase aqueuse dudit produit converti et non neutralisé est récupérée comme une source d'hydroxyde de sodium pour utilisation dans le procédé de mise en pâte Kraft du bois.

17. Procédé selon la revendication 1, dans lequel ladite neutralisation est effectuée par l'ajout d'eau audit savon aqueux d'huile de pin en une quantité pour donner un rapport de poids du savon aqueux à l'eau ajoutée entre 2:1 et 1:2, de préférence d'environ 1,2:1 à 1:1,2 et dans lequel du dioxyde de carbone est ajouté à la pression atmosphérique en une quantité suffisante pour donner un pH à la phase de saumure de bicarbonate aqueuse d'environ 8 à 7.

18. Procédé selon la revendication 1, dans lequel la phase huileuse dudit produit converti et neutralisé est acidifiée à l'aide d'un acide exempt de soufre pour donner une phase d'huile de pin et une phase aqueuse avec un pH inférieur à 5, de préférence un pH d'environ 3 à 4 et dans lequel l'huile de pin est récupérée à partir de ladite phase d'huile de pin.

19. Procédé selon la revendication 18, dans lequel ledit acide d'acidification est choisi parmi l'acide chlorhydrique, l'acide formique, l'acide peracétique, l'acide borique et l'acide nitrique.

20. Procédé selon l'une des revendications 18 ou 19, dans lequel la phase aqueuse d'un pH inférieur à 5 est récupérée et envoyée à un traitement choisi parmi un nettoyage externe, une récupération chimique et une mise en pâte.

21. Procédé selon la revendication 1, dans lequel ladite conversion est effectuée avec un composé de métal alcalino-terreux choisi parmi le nitrate de calcium et le nitrate de magnésium, et la phase aqueuse dudit produit neutralisé est récupérée et utilisée à des fins de fertilisation.

22. Procédé selon l'une quelconque des revendications précédentes, dans lequel ladite conversion est effectuée pour abaisser la teneur en sodium et/ou augmenter la valeur calorimétrique du carburant obtenu à partir de savon d'huile de pin.

23. Procédé selon l'une quelconque des revendications précédentes, dans lequel ledit procédé est effectué pour abaisser l'apport de soufre dans la récupération de produits de valeur à base d'huile de pin.

24. Utilisation d'un composé de métal alcalino-terreux pour l'amélioration de la fabrication de carburant à partir de savon d'huile de pin, dans laquelle le savon d'huile de pin, qui peut être neutralisé avec du dioxyde de carbone, est traité avec un composé de métal alcalino-terreux pour la conversion de savons de sodium en savons de métal alcalino-terreux.

25. Utilisation d'un composé de métal alcalino-terreux pour la réduction de l'apport de soufre dans la récupération d'huile de pin à partir de savon d'huile de pin, dans laquelle le savon d'huile de pin, qui peut être neutralisé avec du dioxyde de carbone, est traité avec un composé de métal alcalino-terreux pour la conversion de savons de sodium en savons de métal alcalino-terreux.
